(19) Europäisches Patentamt
European Patent Office
Office européen des brevets

(11) Veröffentlichungsnummer: **0 369 054 B1**

(12) **EUROPÄISCHE PATENTSCHRIFT**

(45) Veröffentlichungstag der Patentschrift: **01.09.93**

(51) Int. Cl.5: **G01J 3/453**

(21) Anmeldenummer: **88119124.1**

(22) Anmeldetag: **17.11.88**

(54) **Reflektorsystem für Michelson-Interferometer.**

(43) Veröffentlichungstag der Anmeldung:
**23.05.90 Patentblatt 90/21**

(45) Bekanntmachung des Hinweises auf die
Patenterteilung:
**01.09.93 Patentblatt 93/35**

(84) Benannte Vertragsstaaten:
**CH DE FR GB IT LI NL SE**

(56) Entgegenhaltungen:
**US-A- 4 773 757**

**IEEE TRANSACTIONS ON GEOSCIENCE AND
REMOTE SENSING, Band GE-21, Nr. 3, Juli
1983, Seiten 345-349, IEEE, New York, US; P.
BURKERT et al.: "A compact high-resolution
Michelson interferometer for passive atmospheric sounding (MIPAS)"**

(73) Patentinhaber: **Erwin Kayser-Threde Gesellschaft mit beschränkter Haftung
Wolfratshauser Strasse 44-48
D-81379 München(DE)**

(72) Erfinder: **Rippel, Harald, Dr.
Irschenhauser Strasse, 2
8000 München 70(DE)**

(74) Vertreter: **Hoffmann, Klaus, Dr. rer. nat. et al
Hoffmann, Eitle & Partner, Patentanwälte,
Postfach 81 04 20
D-81904 München (DE)**

**Beschreibung**

Die Erfindung betrifft ein Reflektorsystem für Michelson-Interferometer mit einem im Meßstrahlengang angeordneten Strahlteiler, der den Meßstrahlengang in zwei Teilstrahlengänge aufteilt, mit je einer parallel zum Einfallsstrahl reflektierenden ersten Spiegelanordnung in jedem Teilstrahlengang und mit mindestens einem zweiten parallel zum Einfallsstrahl reflektierenden Spiegel, der in dem von einer der ersten Spiegelanordnungen reflektierten Strahlengang angeordnet und mit dem Strahlteiler verbunden ist.

Derartige Reflektorsysteme für Michelson-Interferometer sind bekannt, z. B. aus DE 30 05 520 C2. Bei der dort offenbarten Anordnung sind der Strahlteiler und die zweiten Spiegel in ihrem konstruktiven Aufbau voneinander getrennt.

Ferner ist in der Publikation "IEEE Transactions on Geoscience and Remote Sensing", Vol. GE-21, Nr. 3, Seiten 345 bis 349, erschienen am 03.07.83, ein Michelson-Interfereometer beschrieben, bei welchem der Strahlteiler durch zwei miteinander verkittete Glasprismen gebildet ist, an deren Hypothenusenflächen ein Meßstrahl geteilt und wieder zusammengeführt wird, und der bzw. die zweiten Spiegel auf Kathetenflächen dieser Prismen angebracht sind.

Siehe auch US-A- 4 773 757. Bei derartigen Systemen tritt stets das Problem auf, unterschiedliche Temperaturverhältnisse im Interferometer so weit wie möglich auszugleichen, um einen möglichst hohen Modulationsgrad zu erzielen. Bekanntlich wird der Modulationsgrad M durch die Beziehung $M = I_M/I_{DC}$ ausgedrückt, worin $I_M$ die modulierte Intensität und $I_{DC}$ die Gleichlichtintensität bedeuten. Dabei wird der theoretisch denkbare Wert $M = 1$ praktisch nicht erreicht; die praktisch erreichbaren Werte für M liegen zwischen 0,5 und 0,8.

Im Interesse einer möglichst geringen Beeinträchtigung des Modulationsgrades werden Interferometer häufig thermostatisiert, d. h. in Anordnungen untergebracht, innerhalb derer eine möglichst hohe Temperaturkonstanz bei einer möglichst gleichmäßigen Temperaturverteilung angestrebt wird. Praktisch stoßen jedoch auch derartige Systeme an Grenzen, da sich die Temperaturregelung nach den Temperaturverhältnissen an bestimmten Punkten oder in bestimmten engen Teilbereichen innerhalb des Instrumentes beschränkt, wobei gewisse Temperaturunterschiede innerhalb des Instrumentes meist nicht völlig beseitigt werden können. Andererseits ist der technische Aufwand für die Thermostatisierung des Instrumentes nicht unerheblich, was die Kosten für die Herstellung und den Betrieb merklich erhöht.

Der Erfindung liegt die Aufgabe zugrunde, ein Reflektorsystem für ein Michelson-Interferometer zu schaffen, bei dem die Temperaturempfindlichkeit verringert ist.

Erfindungsgemäß wird dies bei einem Reflektorsystem der eingangs genannten Art dadurch erreicht, daß ein als Strahlteiler dienender teildurchlässiger Reflektor und der zweite Spiegel an einem gemeinsamen Träger angeordnet sind wie im Anspruch 1 definiert.

Hierdurch wird auf überraschend einfache Weise die Temperaturempfindlichkeit des Systems gesenkt, weshalb auch bei Verzicht auf eine Thermostatisierung ein hohe Konstanz des Modulationsgrades erzielt wird. Es hat sich gezeigt, daß mit dem erfindungsgemäßen Reflektorsystem der Modulationsgrad des Interferometers sich um weniger als 1 % pro Grad ändert, während bei bisherigen Bauweisen Änderungen von 5 % pro Grad oder noch größere Änderungen in Kauf genommen werden mußten. Trotzdem können bei der erfindungsgemäßen Bauweise durch den Wegfall der Thermostatisierung die Gestehungs- und Betriebskosten für das Interferometer niedriggehalten werden.

Weitere Ausgestaltungen der Erfindung ergeben sich aus den dem Patentanspruch 1 nachgeordneten Patentansprüchen.

Eine Ausführungsform der Erfindung wird nachfolgend anhand der beigefügten Zeichnungen näher beschrieben. Darin zeigen

Fig. 1 ein Michelson-Doppelpendel-Interferometer in systematischer Darstellung und

Fig. 2 eine Ausführungsform des in Fig. 1 enthaltenen Reflektorsystems in vergrößerter, perspektivischer Darstellung.

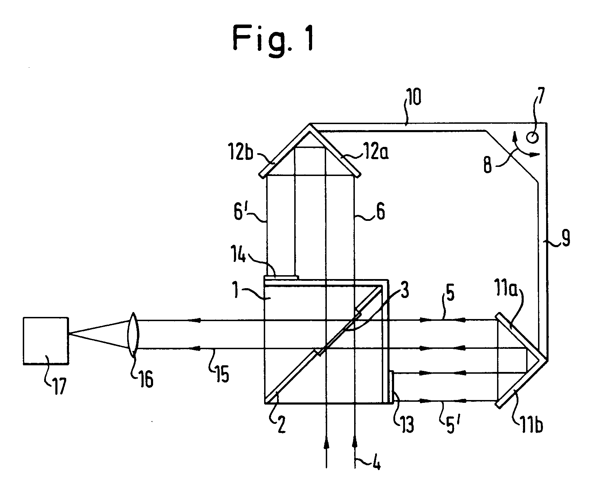

In Fig. 1 ist ein Michelson-Doppelpendel-Interferometer dargestellt, das innerhalb eines nicht gezeigten Instrumentengehäuses oder -rahmens einen im Querschnitt rechteckigen oder quadratischen Träger 1 für das weiter unten näher beschriebene Reflektorsystem aufweist. Innerhalb dieses Trägers ist eine Fläche 2 angeordnet, an der in weiter unten näher beschriebener Weise ein als Strahlteiler dienender halbdurchlässiger Reflektor 3 angeordnet ist. Dieser ist bei der beschriebenen Ausführungsform zum Strahlengang 4 des einfallenden Meßlichtes unter einem Winkel von 45° geneigt und teilt den Meßlichtstrahlengang in die beiden Teilstrahlengänge 5 und 6 auf.

Um eine am nicht dargestellten Gehäuse oder Rahmen des Interferometers gelagerte Achse 7 ist ein Doppelpendel 8 drehbar, das zwei rechtwinklig abstehende Pendelarme 9, 10 aufweist. Jeder dieser Pendelarme trägt eine erste den einfallenden Strahl parallel zu ihm reflektierende Spiegelanordnung, die im beschriebenen Ausführungsbeispiel als ein Dachkantreflektor mit rechwinklig längs einer Dachkante aneinanderstoßenden Reflektorelementen 11a, 11b bzw. 12a, 12b ausgebildet ist. Dabei empfängt das Reflektorelement 11a bzw. 12a unter einem Winkel von 45° den Teilstrahlengang 5 bzw. 6 des Meßlichtes und reflektiert ihn zum Reflektorelement 11b bzw. 12b, von wo aus der Teilstrahlengang 5 bzw. 6 als seitlich versetzter Strahlengang 5' bzw. 6' parallel zum einfallenden Strahlengang austritt und senkrecht jeweils auf einen zweiten, den einfallenden Strahl parallel zu ihm reflektierenden Spiegel 13 bzw. 14 trifft. Die beiden zweiten Spiegel 13, 14 sind auf dem Träger 1 angeordnet, wie weiter unten noch näher ausgeführt wird.

Die den Strahl parallel zu ihm reflektierenden Spiegel 13, 14 werfen die auf sie auftreffenden Strahlen der Strahlengänge 5' bzw. 6' in sich zurück zu den Dachkantreflektoren 11a, 11b bzw. 12a, 12b, wo sie seitlich rückversetzt werden und längs der Strahlengänge 5 bzw. 6 der einfallenden Teilstrahlengänge 5, 6 am teildurchlässigen Reflektor 3 des Trägers sich wieder überlagern und längs des Strahlenganges 15 durch eine Sammellinse 16 zu einem Detektor 17 gelangen, der die interferometrische Auswertung bewirkt.

Die vorbeschriebenen ersten Spiegelanordnungen, welche den einfallenden Strahl parallel zu ihm reflektieren, können anstatt als Dachkantspiegel auch als Tripelspiegel in Form einer sogenannten Kubusecke ausgebildet sein.

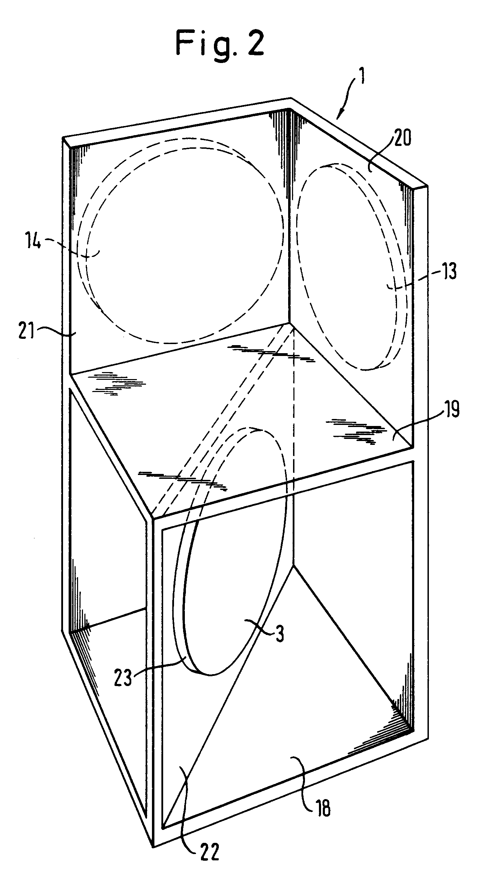

Anhand von Fig. 2 wird nunmehr der Aufbau einer bevorzugten Ausführungsform des Trägers 1 für den teildurchlässigen Reflektor 3 und für die zweiten Spiegel 13 und 14 des Reflektorsystems näher beschrieben.

Der Träger 1 besitzt eine quadratische untere Platte 18 und eine hierzu parallele, gleich ausgebildete obere Platte 19, an denen längs zweier Seiten die beim beschriebenen Ausführungsbeispiel rechtwinklig aneinanderstoßenden Seitenwände 20, 21 angesetzt sind, die über die obere Platte 19 hinausragen. Die Teile 18, 19, 20, 21 bilden zusammen teilweise ein quader- bzw. würfelförmiges Gerüst.

Der Winkel zwischen den beiden Seitenwänden 20, 21 und die gemometrische Form des durch den Träger 1 gebildeten Gerüstes hängen von der Bauweise des Interferometers ab. So kann der vorgenannte Winkel auch andere Werte als 90° annehmen.

Zwischen den parallelen unteren und oberen Platten 18, 19 verläuft längs der diagonalen Fläche 2 eine Diagonalwand 22. In einem kreisförmigen Ausbruch 23 derselben befindet sich der teildurchlässige Reflektor 3, während die den einfallenden Strahl parallel zu ihm reflektierenden Spiegel 13, 14 auf den überstehenden Teilen der Seitenwände 20, 21 montiert sind.

Bei der Ausführungsform gemäß Fig. 2 sind die Spiegel 13, 14 oberhalb des als Strahlteiler wirkenden teildurchlässigen Reflektors 3 angeordnet. Sie können aber auch seitlich hierzu angeordnet sein, wie dies in Fig. 1 im Prinzip dargestellt ist.

Durch die räumlich gedrängte Anordnung des als Strahlteiler wirkenden teildurchlässigen Reflektors 3 und der zweiten Spiegel 13, 14 auf dem gemeinsamen Träger 1 wird erreicht, daß diese Komponenten des Interferometers weitgehend übereinstimmende Temperaturwerte aufweisen, wodurch die Temperaturanfälligkeit des Systems erheblich verringert wird.

Zur weiteren Verringerung von Temperaturunterschieden wird der Träger 1 zweckmäßigerweise aus Aluminium hergestellt, da dieses Material eine hohe Wärmeleitfähigkeit aufweist. Im Interesse einer guten Leitfähigkeit kann der aus den Wänden 18, 19, 20, 21 und 22 bestehende Träger 1 vorzugsweise einstückig ausgebildet sind, z. B. als Aluminium-Gußteil.

Der als teildurchlässiger Reflektor ausgebildete Strahlteiler 3 kann vorzugsweise aus KBR, ZnS, ZnSe, CaF, Ge oder Si hergestellt sein.

**Patentansprüche**

1. Reflektorsystem für Michelson-Interferometer, umfassend

(a) einen im Meßstrahlengang angeordneten Strahlenteiler (3), der den Meßstrahlengang in erste und zweite Teilstrahlengänge aufteilt,

(b) erste und zweite Mehrfachspiegelanordnungen (11a, 11b; 12a, 12b), die jeweils im ersten bzw. zweiten Teilstrahlengang angeordnet sind und den Austrittslichtstrahl jeweils zum Einfallslichtstrahl reflektieren,

(c) erste und zweite Spiegel (13; 14), die jeweils im Austrittslichtstrahl der ersten bzw. zweiten Mehrfachspiegelanordnung (11a, 11b; 12a, 12b) angeordnet sind und den jeweiligen Austrittslichtstrahl zur ersten bzw. zweiten Mehrfachspiegelanordnung (11a, 11b; 12, 12b) zurückreflektieren, und

(d) einen Träger (1), an dem der Strahlenteiler (3) und die ersten und zweiten Spiegel (13; 14) befestigt sind,

dadurch **gekennzeichnet,** daß

(e) die ersten und zweiten Mehrfachspiegelanordnungen (11a, 11b; 12a, 12b) jeweils an Pendelarmen (9, 10) eines drehbar gelagerten Doppelpendels (8) angeordnet sind und

(f) der Träger (1) erste und zweite Seitenwände (20, 21) aufweist, die winklig aneinanderstoßen und an denen jeweils einer der ersten und zweiten Spiegel (13, 14) befestigt ist, wobei die ersten und zweiten Seitenwände (20, 21) ein einstückiges Teil bilden und aus Aluminium bestehen.

2. Reflektorsystem nach Anspruch 1, dadurch **gekennzeichnet,** daß der Träger (1) zumindest teilweise ein quaderförmiges Gerüst aufweist, wobei der teildurchlässige Reflektor (3) an einer diagonal zu den Seitenwänden (20, 21) angeordneten Wandung (22) des Trägers (1) und der bzw. die zweiten Spiegel (13, 14) an Seitenwänden (20, 21) des Trägers (1) oder an Verlängerungen dieser Seitenwände angeordnet sind.

3. Reflektorsystem nach Anspruch 2, dadurch **gekennzeichnet,** daß der Träger (1) eine Querplatte (19) aufweist, die senkrecht zu den Seitenwänden (20, 21) derart angeordnet ist, daß die zweiten Spiegel (13, 14) an den Seitenwänden (20, 21) auf der einen und die diagonal verlaufende Wandung (22) mit dem Strahlenteiler (3) auf der anderen Seite der Querplatte (19) angeordnet sind.

4. Reflektorsystem nach Anspruch 2 oder 3, dadurch **gekennzeichnet,** daß der Träger (1) zwei Querplatten (18, 19) aufweist, die parallel zueinander und senkrecht zu den Seitenwänden (20, 21) des Trägers (1) angeordnet sind, und die diagonal verlaufende Wandung (22) mit dem Strahlenteiler (3) zwischen den beiden Querplatten (19, 18) angeordnet ist.

5. Reflektorsystem nach Anspruch 4, dadurch **gekennzeichnet,** daß der Träger (1) mit seinen Seitenwänden (20, 21), seinen Querplatten (18, 19) und seiner diagonal verlaufenden Wandung (22) durch ein einstückiges Aluminium-Gußteil gebildet ist.

6. Reflektorsystem nach einem der vorangehenden Ansprüche, dadurch **gekennzeichnet,** daß der teildurchlässige Reflektor (3) aus KBR, ZnS, ZnSe, CaF, Ge oder Si hergestellt ist.

**Claims**

1. Reflector system for Michelson interferometer, including

   (a) a beam splitter (3) which is arranged in the measuring beam path and which splits the measuring beam path into first and second partial beam paths,

   (b) first and second multiple mirror assemblies (11a, 11b; 12a, 12b) which are arranged in the first and second partial beam paths respectively and reflect the emergent light beam respectively back to the incident light beam,

   (c) first and second mirrors (13; 14) which are arranged in the emergent light beam of the first and second multiple mirror assemblies respectively (11a, 11b; 12a, 12b) and reflect the respective emergent light beam back to the first and second multiple mirror assemblies respectively (11a, 11b; 12a, 12b), and

   (d) a support (1) on which the beam splitter (3) and the first and second mirrors (13; 14) are mounted,

characterised in that

   (e) the first and second multiple mirror assemblies (11a, 11b; 12a, 12b) are arranged respectively on pendulum arms (9, 10) of a rotatably mounted double pendulum (8) and

   (f) the support (1) comprises first and second side walls (20, 21) which abut each other at an angle and to which is attached in each case one of the first and second mirrors (13, 14), wherein the first and second side walls (20, 21) form a single piece and are made of aluminium.

2. Reflector system according to claim 1, characterised in that the support (1) comprises at least partially a cuboid structure, wherein the partially transmitting reflector (3) is arranged on a wall (22) of the support (1) arranged diagonally to the side walls (20, 21), and the second mirror or mirrors (13, 14) are arranged on side walls (20, 21) of the support (1) or on extensions of these side walls.

3. Reflector system according to claim 2, characterised in that the support (1) comprises a transverse plate (19) which is arranged perpendicularly to the side walls (20, 21) in such a way that the second mirrors (13, 14) on the side walls (20, 21) are arranged on one side of the transverse plate (19) and the diagonally extending wall (22) with the beam splitter (3) is arranged on the other side.

4. Reflector system according to claim 2 or 3, characterised in that the support (1) comprises two transverse plates (18, 19) which are arranged parallel to each other and perpendicularly to the side walls (20, 21) of the support (1), and the diagonally extending wall (22) with the beam splitter (3) is arranged between the two transverse plates (19, 18).

**5.** Reflector system according to claim 4, characterised in that the support (1) with its side walls (20, 21), its transverse plates (18, 19) and its diagonally extending wall (22) is formed by a one-piece aluminium casting.

**6.** Reflector system according to any of the preceding claims, characterised in that the partially transmitting reflector (3) is made of KBr, ZnS, ZnSe, CaF, Ge or Si.

**Revendications**

**1.** Système de réflecteur pour interféromètre de Michelson, comprenant :

    (a) un diviseur de rayon (3) disposé dans le trajet du rayon de mesure et divisant le trajet des rayons de mesures en des premier et deuxième trajets de rayons partiels,

    (b) des premier et deuxième agencements à miroirs multiples (11a, 11b; 12a, 12b), disposés chacun dans le premier respectivement le deuxième trajet de rayon partiel et réfléchissant le rayon de lumière sortant, chaque fois au rayon de lumière incident,

    (c) des premier et deuxième miroirs (13; 14), disposés chacun dans le trajet de rayon sortant du premier, respectivement du deuxième agencement à miroirs multiples (11a, 11b; 12a ,12b) et retournant, par réflexion, le rayon de lumière sortant vers le premier, respectivement le deuxième agencement à miroirs multiples (11a, 11b ;12a, 12b), et

    (d) un support sur lequel sont fixés le diviseur de rayons (3) et les premier et deuxième miroirs (13.14),

    caractérisé en ce que

    (e) les premier et deuxième agencements à miroirs multiples (11a, 11b; 12a, 12b), sont chacun disposés sur des bras pendulaires (9, 10) d'un pendule double (8) monté à rotation et

    (f) le support (1) présente des première et deuxième parois latérales (20, 21), se rejoignant en formant un angle et sur lesquelles chaque fois est fixé l'un des premier et deuxième miroirs (13, 14), les première et deuxième parois latérales (20, 21) formant une pièce d'un seul tenant, fabriquée en aluminium

**2.** Système de réflecteur selon la revendication (1) caractérisé en ce que le support (1) présente au moins partiellement un bâti parallélépipédique, le réflecteur (3) partiellement transparent étant disposé sur une paroi (22), disposé en diagonale par rapport aux parois latérales (20, 21) du support (1) et le, respectivement les deuxième, miroirs (13, 14) étant disposés sur les parois (20, 21) du support 1 ou sur des prolongements de ces parois latérales.

**3.** Système de réflecteur selon la revendication 2 caractérisé en ce que le support (1) présente une plaque transversale (19), disposée perpendiculairement aux parois latérale (20, 21), de telle façon que les deuxième miroirs (13, 14) sont disposés sur les parois latérales (20, 21) d'un coté de la plaque transversale (19) et que la paroi (22) s'étendant en diagonale et portant le diviseur de rayon (3) est disposé de l'autre coté de la plaque transversale (19).

**4.** Système de réflecteur selon la revendication 2 ou 3 caractérisé en ce que le support (1) présente deux plaques transversales (18, 19), disposées parallèlement entre elles et perpendiculairement aux parois latérales (20,21) du support (1), et la paroi (22), s'étendant en diagonale et portant le diviseur de rayon (3), étant disposée entre les deux plaques transversales (18, 19).

**5.** Système de réflecteur selon la revendication 4 caractérisé en ce que le support (1) est formé, avec ses parois latérale (20, 21), ses plaques transversales (18, 19) et sa paroi (22) s'étendant en diagonale, par une pièce moulé en aluminium, d'un seul tenant.

**6.** Système de réflecteur selon l'une des revendications précédentes, caractérisé en ce que le réflecteur partiellement transparent (3) est fabriqué en KBR, ZnS, ZnSe, CaF, Ge ou Si.

# Fig. 1

# Fig. 2